**Europäisches Patentamt**

(19) **European Patent Office**

**Office européen des brevets**

(11) Veröffentlichungsnummer : **0 036 548**
**B1**

(12) # EUROPÄISCHE PATENTSCHRIFT

(45) Veröffentlichungstag der Patentschrift :
23.05.84

(51) Int. Cl.³ : **G 03 F   1/00**

(21) Anmeldenummer : **81101733.4**

(22) Anmeldetag : **10.03.81**

(54) **Verfahren zum Gravieren von Druckformen.**

(30) Priorität : **21.03.80 DE 3010880**

(43) Veröffentlichungstag der Anmeldung :
**30.09.81 Patentblatt 81/39**

(45) Bekanntmachung des Hinweises auf die Patenterteilung : **23.05.84 Patentblatt 84/21**

(84) Benannte Vertragsstaaten :
**AT BE CH FR GB LI NL**

(56) Entgegenhaltungen :
**DE-A- 2 432 993**
**DE-A- 2 621 057**
**DE-B- 1 039 842**
**DE-B- 2 805 874**
**FR-A-   997 932**
**IBM TECHNICAL DISCLOSURE BULLETIN, Band 20, Nr. 1, Juni 1977, Seiten 339-343 New York, U.S.A. P. STUCKI: "Continuous-to-halftone image conversion with controlled dot clustering to minimize scanned reproduction data loss"**

(73) Patentinhaber : **DR.-ING. RUDOLF HELL GmbH**
**Grenzstrasse 1-5**
**D-2300 Kiel 14 (DE)**

(72) Erfinder : **Sciarretta, Benito**
**Corso Vittorio Emanuele 166**
**Turin (IT)**

## Beschreibung

Die vorliegende Erfindung bezieht sich auf ein Verfahren zum Gravieren von Druckformen. Insbesondere bezieht sich die Erfindung auf ein Verfahren zur Gravur von Druckformen im Rotationsdruck, bei dem gerasterte Vorlagen verwendet werden.

Die Benutzung eines gerasterten Originals für die Gravur der Rotationsdruckform ist bereits vorgeschlagen worden in den US-Patenten Nr. 2 532 702 ; 2 543 393 und 302 411 und in den britischen Patenten Nr. 706 688 und 706 689. Diese Patente beziehen sich aber auf Verfahren für die Herstellung der Druckform auf chemischem Wege.

Es ist weiterhin ein elektromechanisches Verfahren zur Herstellung von Druckformen bekannt, das folgende Schritte umfaßt ;

a) optisch-elektrische Abtastung des Originals mittels eines optischen Beleuchtungs- und Abtaststems, das Mittel aufweist, um das Original in den Fokus zu setzen,

b) Umsetzung der von der Abtastung des Originals gewonnenen Lichtsignale in elektrische Signale, welche die Intensität des Lichtsignals wiedergeben, sowie die Verarbeitung der elektrischen Signale in einem elektronischen Rechner,

c) die Gravur der Druckform mit einem Gravierzerkzeug, das von den gewonnenen elektrischen Signalen gesteuert wird.

Ein solches Verfahren wird seit langem bei den Graviermaschinen vom Typ « Helio-Klischograph » der Anmelderin angewendet. Es werden ungerasterte Farbauszüge, auch Opale genannt, abgetastet, die speziell für diesen Zweck auf opakes Aufsichtsmaterial umkopiert worden sind. Die Herstellung dieser Opale ist teuer und zeitaufwendig, weshalb die Herstellung der Opale gern vermieden würde.

Viel einfacher wäre es, statt der Opale, das heißt der ungerasterten Farbauszüge, bereits gerasterte Farbauszüge abzutasten, wie sie beim Offsetdruck oder sonstigen Druckverfahren, die denen gerasterte Farbauszüge verwendet werden, anfallen. Solche Farbauszüge lassen sich billiger herstellen als die bisher üblichen Opale oder liegen bereits sowieso vor, wenn das Original bereits im Offsetdruck vervielfältigt worden ist. Benutzt man aber bei diesem Verfahren statt der ungerasterten Vorlagen die gerasterten Farbauszüge, so tritt beim Druck ein nicht akzeptables Moiré auf, das aus der überlagerung des Rasters der abgetasteten Originalfolie mit dem Raster, mit denen das Gravierzerkzeug die Druckform graviert, resultiert.

Aufgabe der vorliegenden Erfindung ist es daher, ein Verfahren anzugeben, mit dem es ermöglicht wird, mit einer elektromechanischen Gravurmaschine zur Herstellung von Druckformen auch gerasterte Originale abzutasten.

Im Hinblick auf die Realisierung dieses Ziels hat die vorliegende Erfindung ein Verfahren zum Gravieren einer Druckform zum Gegenstand, welches ein Original benutzt, das aus einer gerasterten Vorlage besteht, wie sie z. B. normalerweise von Filmen gewonnen wird, die bei Offsetdruck oder Lichtsatz verwendet werden, wobei dieses Verfahren folgende Schritte umfaßt ;

a) die optisch-elektrische Abtastung des Originals mittels eines Beleuchtungs- und Abtastsystems, das Mittel aufweist, durch die das Original aus dem Fokus gesetzt werden kann,

b) die Transformation des von der Originalabtastung gewonnenen Lichtsignals in ein elektrisches Signal, daß das Lichtsignal wiedergibt, sowie die elektronische Verarbeitung des elektrischen Signals in einem elektronischen Rechner,

c) Elektronische Unscharfmaskierung des vom Abtastsystem gelieferten Signals (wie in der DE-B-1 039 842 beschrieben),

d) Gravur der Druckform mittels eines Gravierwerkzeuges, das von den gewonnenen elektrischen Signalen gesteuert wird.

Der zusätzliche Verfahrensschritt gegenüber einer normalen Gravur besteht in der Unscharfstellung des optischen Abtastsystems aus der korrekten Scharfstellung auf das Original, bevor die optische Abtastung des Originals für die Herstellung der Druckform stattfindet.

Wenn die Abtastung des gerasterten Originals mit dem optischen System außer Fokus durchgeführt wird und der dadurch entstehende Verlust an Bildinformation durch eine Unscharfmaskierung kompensiert wird, entfällt das Phänomen des Moirés.

Die Erfindung wird im folgenden anhand der Figuren 1 bis 3 näher erläutert. Es zeigen

Figur 1 ein prinzipielles Ausführungsbeispiel der Erfindung,

Figur 2 eine detaillierte Darstellung des Beleuchtungs- und Abtastsystems und

Figur 3 ein Beispiel für eine Einrichtung zur Kontrastanhebung mittels elektronischer Unscharfmaskierung.

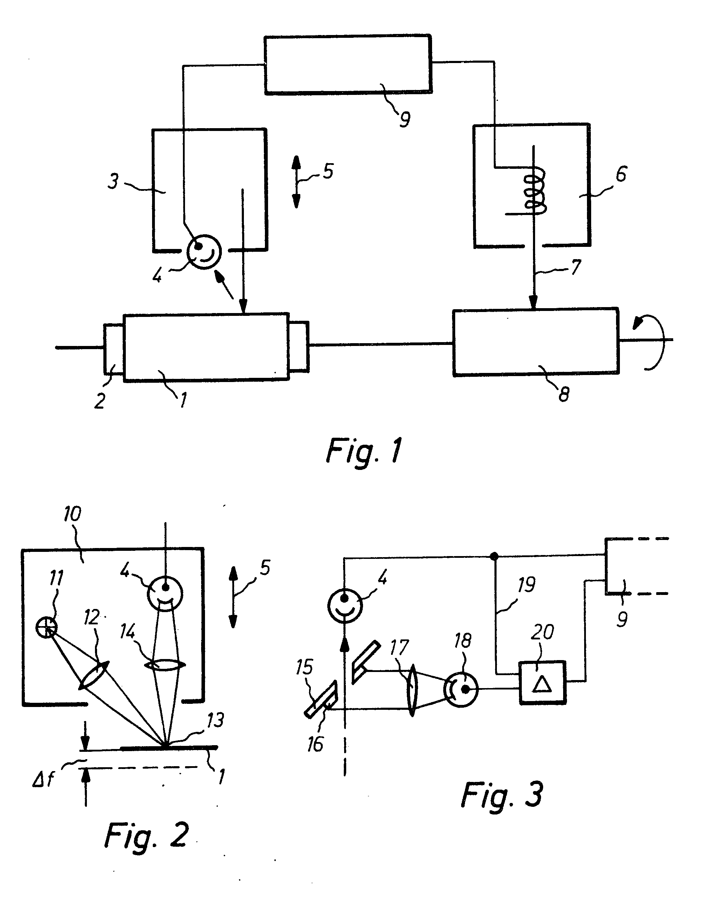

Die Figur 1 zeigt eine Prinzipdarstellung einer Graviermaschine zur Herstellung von Tiefdruckrotationsformen, wie sie z. B. bei der Maschine « Helio-Klischograph » der Anmelderin realisiert ist. Die Maschine ist hier nur schematisch dargestellt, da ihr Aufbau und ihre Antriebstechnik z. B. in der US-A 3 582 549 näher dargestellt ist. Diese Maschine und auch das Verfahren, nach dem diese Maschine arbeitet, geht aus diesem Patent hervor, und solche Geräte sind seit langem auf dem Markt, weshalb dem Fachmann die näheren Einzelheiten dieser Maschine geläufig sind.

Ein Original 1, das aus einer gerasterten Vorlage besteht, welche normalerweise im Offsetdruck oder in der Satztechnik verzendet wird, wird auf einen Abtastzylinder 2 montiert, der sich mit einer konstanten Geschwindigkeit um seine Längsachse dreht. Ein optisches Beleuchtungs- und Abtastsystem 3 dient zur optischen Abtastung der Originals. Das optische System 3 ist mit bekannten Mitteln (nicht dargestellt) versehen, um das Original 1 in den Fokus zu setzen. Ein Fotowandler 4, z. B. ein Multiplier, ist für die Transformation des vom Original 1 reflektierten Lichtsignal in ein elektrisches Signal vorgesehen, wobei das elektrische Signal die Intensität des reflektierten Lichtes wiedergibt. Eine elektronische Verarbeitungseinheit 5 ist weiterhin vorgesehen, um die elektrischen Signale, die von der Einrichtung 4 erhalten werden, zu verarbeiten und sie an eine elektromagnetische Steuereinheit 6 weiterzuleiten, die zur Ansteuerung eines Gravurwerkzeuges 7 dient. Die Tiefe der Gravur, die das Gravierwerkzeug 7 durchführt, hängt von der Charakteristik, d. h. von der Amplitude des von der Steuereinheit 6 erhaltenen elektrischen Signals und damit von der Intensität des reflektierten Lichsignals, welches von der Einrichtung 4 gewonnen wird, ab. Die eigentliche Druckform wird durch die Gravur erhalten. Ein rotierender Kupferzylinder 8, der im Beispiel der Figur 1 auf derselben Achse wie der Abtastzylinder montiert ist, rotiert mit derselben Geschwindigkeit, wie der Abtastzylinder, und das Gravierwerkzeug 7 graviert in die Kupferoberfläche des Zylinders die Näpfchen, die beim Druck die Farbe aufnehmen und auf das Papier übertragen.

Wenn das Abtastsystem 3 präzise auf das Original fokussiert ist, ruft die Überlagerung des Rasters des Originals 1 mit dem korrespondierenden Raster des Gravierwerkzeuges 7 das vorher zitierte Phänomen des Moirés hervor.

Das Verfahren gemäß der vorliegenden Erfindung sieht vor, vor dem Schritt der Abtastung des Originals 1 einen weiteren Schritt, die Außerfokusstellung des Originals vorzunehmen. So muß das optische System gemäß der vorliegenden Erfindung in der Nähe des exakten Fokus unscharf gestellt werden entsprechend dem verwendeten Original, d. h. entsprechend der Rasterweite des Originals.

Wenn die Maschine « Helio-Klischograph » der Anmelderin benutzt wird, so ist ein bevorzugter Wert für die Unscharfstellung des Systems aus der präzisen Fokusstellung vorzugsweise etwa 1,25 mm. Diese Länge entspricht bei dieser Maschine etwa 1 1/4 Umdrehung einer Stellschraube für die Einstellung des Fokus.

Diese Einstellschraube ist in der Figur 1 nicht näher dargestellt, sondern ist durch den Doppelpfeil 5 angedeutet, der bedeutet, daß der gesamte Abtastkopf abstandsmäßig in bezug auf den Abtastzylinder bewegt werden kann. Weil dem Fachmann der technische Aufbau dieser Graviermaschine bekannt ist und auch die technische Ausführung der Verschiebung eines solchen Abtastsystems mit einer Stellschraube oder Spindel keine Schwierigkeiten bedeutet, wurde auf diese Darstellung des mechanischen Aufbaus verzichtet. Es ist ebenso möglich, das optische System selbst unscharf zu stellen, und zwar derart, wie dies z. B. bei einem Teleskop geschieht.

Die Anwendung der Erfindung ist aber ebenso möglich bei Graviermaschinen, wie sie in der DE-A 25 08 734 der Anmelderin ausführlich beschrieben ist. Da die technischen Einzelheiten solcher Graviermaschinen dem Fachmann bekannt sind, weil diese Maschinen schon lange im praktischen Gebrauch sind, und außerdem der Aufbau aus der US-A 3 582 549 oder, wie bereits erwähnt, aus der DE-A 25 08 734 bekannt sind, wurde hier auf eine ausführliche zeichnerische Darstellung der Gravireinheit und der elektronischen Signalweiterverarbeitung verzichtet.

Die Figur 2 zeigt das Beleuchtungs- und Abtastsystem 3 im Detail. Innerhalb des Gehäuses 10 des Abtastsystems 3, das auch häufig Abtastkopf genannt wird, befindet sich eine Lichtquelle 11, deren Licht über eine Optik 12 auf die Vorlage 1 im Fokus Punkt 13 fokussiert ist.

Weiterhin ist, wie in Figur 1, der Fotowandler 4 vorgesehen, der über eine Optik 14 das von der Vorlage reflektierte Licht erhält. Die Unscharfstellung des Systems für die vorliegende Erfindung erfolgt z. B. durch Änderung des Abstandes des Abtastkopfes von der Vorlage um den Betrag f = 1,25 mm. Weiterhin wird der normalen Abtastung der Schritt der Unscharfmaskierung (beschrieben in DE-B- 10 39 842) hinzugefügt, um den durch das Unscharfstellen entstandenen Verlust an Bildinformation zu kompensieren.

Figur 3 zeigt eine Einrichtung zur Verbesserung des Konturenwiedergabe, d. h. der Schärfe, die zusätzlich innerhalb des Abtastkopfes 3 vorgesehen sein kann. Im Strahlengang zwischen der Optik 14 und dem Fotowandler 4 befindet sich ein gelochter schräggestellter Spiegel 15, der um seine Lochung herum verspiegelt ist, und zwar in einer solchen Breite, wie die Umgebung des Abtastflecks 13 abgetastet werden soll. Das von der verspiegelten Fläche 16 reflektierte Licht gelangt über eine weitere Optik 17 auf einen weiteren Fotowandler 18 und das Ausgangssignal des Wandlers 18 wird zusammen mit einem über Leitung 19 vom Hauptkanal, d. h. vom Ausgang des Fotowandlers 4 abgeleiteten Signal auf eine Stufe 20 gegeben, welche aus den beiden Signalen ein Differenzsignal bildet. Dieses Differenzsignal wird dann zusammen mit dem Hauptsignal, d. h. dem Ausgangssignal, des Fotowandlers 4 auf die Stufe 9 der Figur 1 gegeben, in der das Differenzsignal der Stufe 20 dem Hauptsignal wieder überlagert wird. Die Wirkungsweise dieser Maßnahme ist in der DE-B-10 39 842 dargelegt. Es wird erreicht, daß das wiedergegebene Bild schärfer als das Original ist.

Die für die vorliegende Erfindung verwendeten gerasterten Vorlagen können durchsichtige Rasterfilme sein, die auf einer weißen Abtasttrommel aufgespannt sind, oder auch auf Fotopapier aufbelichtete Aufsichtsvorlagen.

Der Vorteil der vorliegenden Erfindung, daß die Möglichkeit geschaffen wird, auch gerasterte Vorlagen abzutasten, liegt insbesondere darin, daß z. B. beim Vorlegen von gerasterten Offsetfarbauszügen diese direkt für den Tiefdruck abgetastet werden können und daß es leicht mittels einer Offsetpresse möglich ist, bevor die eigentliche Herstellung der Tiefdruckform beginnt, einen Proof, das heißt einen Probeandruck, zu erstellen. Dies ist besonders preis- und zeitsparend.

Die Erfindung wird mit Vorteil auf dem Gebiet der Herstellung von Rotationsdruckformen für den Tiefdruck angewendet. Wenn bereits Offsetreproduktionen erstellt worden sind, können die gerasterten Offsetfarbauszüge ohne weitere Umkopierung zur Herstellung der Tiefdruckform verwendet werden. Auch sonstige gerasterte Farbauszüge, sei es auf Fotopapier, gedruckt oder auf Film, können direkt für die Tiefdruckformherstellung verwendet werden, ohne daß die sogenannten Opale für die Abtastung hergestellt werden müssen.

**Anspruch**

Verfahren zum Gravieren von Druckformen, bei dem gerasterte Originale verwendet werden wobei das Verfahren folgende Verfahrensschritte umfaßt ;

a) optisch-elektrische Abtastung des Originals mittels eines Beleuchtungs- und Abtastsystems, das Mittel aufweist, durch die das Original aus dem Fokus gesetzt wird,

b) Transformation des von der Abtastung des Originals gewonnenen Lichtsignals in ein elektrisches Signal und die elektronische Verarbeitung des elektrischen Signals in einem elektronischen Rechner

c) zusätzliche elektronische Unscharfmaskierung des vom Abtastsystem gelieferten Signals,

d) Gravur der Druckform mittels eines Gravurwerkzeuges, das von den gewonnenen elektrischen Signalen gesteuert wird, gekennzeichnet durch Unscharfstellung des optischen Abtastsystems aus der korrekten Scharfstellung auf das Original, bevor die optische Abtastung des Originals für die Herstellung der Druckform stattfindet.

**Claim**

Method for engraving printing forms using screened originals, the method comprising the following steps :

a) opto-electronic scanning of the original by means of an illumination and scanning system comprising means for setting the original out of focus,

b) conversion of the optical signal obtained by scanning the original into an electrical signal and electronic processing of the electrical signal by means of an electronic computer,

c) additional electronic unsharp masking of the signals delivered by the scanning system,

d) engraving the printing forms by means of an engraving tool which is controlled by the electrical signals, characterized by unsharp setting of the optical scanning system from the correct sharp setting on the original, before the optical scanning of the original is performed for the production of the printing form.

**Revendication**

Procédé pour graver des formes d'impression, procédé dans leauel des originaux tramés sont utilisés, ce procédé comportant les étapes suivantes :

a) balayage optique-électrique de l'original au moyen d'un système d'éclairage et de balayage qui comporte des moyens grâce auxquels l'original est placé en dehors du foyer,

b) transformation du signal lumineux obtenu par balayage de l'original en un signal électrique et traitement électronique de ce signal électrique dans le calculateur électronique,

c) masquage électronique supplémentaire du flou du signal délivré par le système de balayage,

d) gravure de la forme d'impression au moyen d'un outil à graver commandé par les signaux électriques obtenus, procédé caractérisé en ce qu'une défocalisation du système de balayage optique à partir de la position de focalisation correcte sur l'original est effectuée avant le balayage optique de l'original pour la fabrication de la forme d'impression.

Fig. 1

Fig. 2

Fig. 3